(19) Europäisches Patentamt European Patent Office Office européen des brevets

(11) **EP 2 747 998 B1**

(12) **EUROPEAN PATENT SPECIFICATION**

(45) Date of publication and mention
of the grant of the patent:
**03.06.2020 Bulletin 2020/23**

(21) Application number: **12756895.4**

(22) Date of filing: **30.08.2012**

(51) Int Cl.:
**B32B 27/08** *(2006.01)* **B32B 27/32** *(2006.01)*

(86) International application number:
**PCT/US2012/053045**

(87) International publication number:
**WO 2013/055461 (18.04.2013 Gazette 2013/16)**

(54) **SQUEEZABLE AND CONFORMABLE ORIENTED POLYPROPYLENE LABEL**

ZUSAMMENDRUCKBARES UND ANPASSBARES ORIENTIERTES ETIQUETT AUS
POLYPROPYLEN

ETIQUETTE COMPRESSIBLE ET CONFORMABLE DE POLYPROPYLENE ORIENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.10.2011 US 201161545612 P**

(43) Date of publication of application:
**02.07.2014 Bulletin 2014/27**

(73) Proprietor: **Jindal Films Europe Virton SPRL
6761 Virton (BE)**

(72) Inventors:
• **CAMPEAU, Anne, P.
Hixson, TN 37343 (US)**

• **LU, Pang-Chia
Pittsford, NY 14534 (US)**

(74) Representative: **Barker Brettell LLP
100 Hagley Road
Edgbaston
Birmingham B16 8QQ (GB)**

(56) References cited:
**EP-A1- 2 039 508        WO-A1-02/40270
DE-A1- 4 306 103        US-A1- 2003 143 357
US-A1- 2004 033 349        US-A1- 2008 199 647
US-A1- 2008 206 505        US-A1- 2010 260 989
US-B2- 6 682 822**

**Description**

**FIELD OF THE INVENTION**

The present invention relates to pressure sensitive labels based on oriented polypropylene, and, in particular, to oriented polypropylene labels having improved squeezability and low haze.

**BACKGROUND**

Pressure sensitive labels are used in a wide variety of labelling applications. Many of these labels are used on semi-rigid or plastic containers or tubes that would be frequently squeezed during consumer use. Such applications include containers used in health and beauty, and food packaging (shampoo, lotion, dressing, tubes, etc.). Conformable labels are also needed for smooth application to a contour container or rigid bottles, which may have irregular shapes.

Currently in the market, polyethylene films and modified polypropylene films are mostly used for this label application. The main problem with a polyethylene label is that it is usually soft and requires high thickness to compensate its low stiffness and modulus. For polypropylene based conformable labels, usually a high level of polyethylene or polypropylene block copolymers are added that could cause undesirable high haze and loss of physical properties.

We found that squeezable, conformable labels can be made by using polypropylene and a propylene-based copolymer (elastomer) in a 3 to 5 -layer or more co- extruded film structure with copolymer skins. This film will have balanced properties of conformability, stiffness, and modulus. Stiffness and modulus properties are required for pressure-sensitive adhesive label converting operations, including die cutting and label dispensing.

Though there is general disclosure in the art of incorporating propylene-based copolymers and elastomers in polypropylene films, there is no disclosure of having a composition with the right balance of stiffness (e.g., for cutting) and conformability (e.g., for squeezability). Related patents and publications include U.S. Patent Nos. 7,927,712; 7,537,829; 7,217,463; 7,052,750; 6,835,462; 6,663,947; 6,376,058; 5,709,937; 5,451,283; U.S. Application Publication Nos. 2009/0220757; 2009/0197022; 2009/0136698; 2008/248299; 2006/0178483; 2003/0143357; EP 1 423 408 and PCT Publication WO 2010/120295.

US 2008/206505 describes a polymeric film for labelling articles that comprises a core layer (A), a print skin layer (B) comprising a polypropylene homopolymer, a polypropylene copolymer, a high density polyethylene, or a mixture of any of the foregoing polymers and at least 10% by weight based on the weight of the layer (B) of a polyolefin elastomer, an alkene-unsaturated carboxylic acid or acid derivative copolymer, or a mixture of any of the foregoing polymers, and an adhesive skin layer (C) comprising a polypropylene homopolymer, where the polymeric film is oriented.

**SUMMARY**

According to a first aspect, the present invention provides an oriented polypropylene film comprising at least one core layer sandwiched between at least two skin layers, the layers comprising (or consisting essentially of): (i) a core layer comprising polypropylene and within the range of from 20 wt% to 50 wt%, by weight of total materials in the core layer, of a propylene-$\alpha$-olefin elastomer having within a range of from 5 wt% to 25 wt% (from 5 wt% or 8 wt% or 10 wt% or 12 wt% to 18 wt% or 20 wt% or 22 wt% or 25 wt%) $\alpha$-olefin derived units, by weight of the propylene-$\alpha$-olefin elastomer; (ii) a printable skin layer consisting of medium-density polyethylene or high-density polyethylene; and (iii) an adhesive-accepting skin layer comprising within a range of from 60 wt% to 100 wt%, by weight of total materials in the adhesive-accepting skin layer, of a polypropylene; wherein the oriented polypropylene film has a machine direction ("MD") Elastic Modulus (ASTM 882) of at least 80 kpsi (551 MPa); and a Haze (ASTM D 1003) value of less than 10%.

According to a second aspect, the present invention provides a label formed from the oriented polypropylene film of the first aspect, comprising the oriented polypropylene film with a backing sheet adhered to the adhesive-accepting skin layer with an adhesive there-between.

According to a third aspect, the present invention provides a hollow, squeezable container having the label of the second aspect adhered thereto.

According to a fourth aspect, the present invention provides a method of forming an adhesive label comprising: (1) coextruding at least a three layer film comprising: (i) a core layer comprising (or consisting essentially of, or consisting of) polypropylene and within the range of from 20 wt% to 50 wt%, by weight of total materials in the core layer, of a propylene-$\alpha$-olefin elastomer having within a range of from 5 wt% to 25 wt% (from 5 wt% or 8 wt% or 10 wt% or 12 wt% to 18 wt% or 20 wt% or 22 wt% or 25 wt%) $\alpha$-olefin derived units, by weight of the propylene-$\alpha$-olefin elastomer; (ii) a printable skin layer consisting of medium-density polyethylene or high-density polyethylene; and (iii) an adhesive-accepting skin layer comprising within a range of from 60 wt% to 100 wt%, by weight of total materials in the adhesive accepting skin layer, of a polypropylene; (2) orienting the at least a three-layer film; (3) attaching an adhesive to the adhesive-accepting skin layer of the at least a three-layer film; (4) attaching a backing sheet to the at least a three-layer film having the adhesive there-between, thus forming an adhesive sheet of the at least a three-layer film; and (5) cutting the adhesive sheet in a form of a label with a cutting die at a die gap within the range of from 25 $\mu$m to 75 $\mu$m and a minimum die pressure of greater than 200 psi (1379 kPa); wherein the polypropylene film has a machine direction ("MD") Elastic Modulus (ASTM 882) of at least 80 kpsi (551 MPa); and a Haze (ASTM D 1003) value of less than 10%.

The various descriptive elements and numerical ranges disclosed herein for the films and labels or method of making the films and labels can be combined with other descriptive elements and numerical ranges to describe the invention(s); further, for a given element, any upper numerical limit can be combined with any lower numerical limit described herein.

## DETAILED DESCRIPTION

The present disclosure describes a polypropylene-based, adhesive, multi-layered label formed from a film that will conform readily to the external (or internal) surface of round, oval, or otherwise irregularly shaped articles such as bottles, etc. The term "label" simply refers to the films described herein having adhesive bound thereto, and optionally a backing sheet, thus, the label should have the same properties as the base film as described herein. These labels are provided such that they are squeezable with the article to which it is attached without bubbling, tearing, or otherwise becoming permanently deformed. At the same time, the labels are also made to be readily cuttable so that during the process to cut and dispense the labels from a larger backing sheet, labels are not destroyed and lost. This is achieved by providing a polypropylene film having a soft polymer modifier in the core layer, and, in a particular embodiment, a medium to high density polyethylene as the upper print skin layer, that is, the layer that will contact the cutter first. The oriented polypropylene film of the invention is defined in claim 1, and the label formed from that oriented polypropylene film is defined in claim 10.

The labels have a desirable amount of strength and elasticity. For instance, the films that make up the labels having at least three-layers of materials have an MD Elastic Modulus (ASTM 882) of at least 80 kpsi (551 MPa), such as at least 100 kpsi (689 MPa), or within the range of from 80 kpsi (551 MPa) or 100 kpsi (689 MPa) or 110 kpsi (758 MPa) to 150 kpsi (1034 MPa) or 160 kpsi (1103 MPa) or 180 kpsi (1241 MPa) or 200 kpsi (1379 MPa). Further, the films are clear, such that they possess a Haze (ASTM D 1003) value of less than 10%, such as less than 5% or 7%. In one embodiment, the films have a TD Elastic Modulus (ASTM 882) of at least 200 kpsi (1379 MPa), or within the range of from 150 kpsi (1034 MPa) or 160 kpsi (1103 MPa) or 180 kpsi (1241 MPa) or 200 kpsi (1379 MPa) to 250 kpsi (1724 MPa) or 260 kpsi (1792 MPa) or 270 kpsi (1861 MPa) or 280 kpsi (1930 MPa) or 290 kpsi (2000 MPa) or 300 kpsi (2068 MPa).

By "consisting essentially of," what is meant is that the particular layer referred to does not have any more than 1 wt% or 2 wt% or 3 wt% of a polymer modifier, but does not exclude the possibility of the layer having other additives known in the art such as anti-slip agents, anti-blocking agents, anti-oxidants, pigments, whitening agents, cavitation agents, etc. In a very particular embodiment, no cavitation or whitening agents (such as titanium dioxide) are present. Thus, in one embodiment the polypropylene layer consists of one core layer; wherein the core layer consists essentially of the propylene-$\alpha$-olefin elastomer and the polypropylene.

The films described herein can be of any number of layers provided that they include at least one printable skin layer, at least one adhesive-accepting skin layer, and at least one core layer, as defined above. The film can also be of any desirable thickness, though in specific embodiments it is desirable if the layers' skins and core layers have a thickness of at least 50 $\mu$m or 54 $\mu$m or 58 $\mu$m or 60 $\mu$m or 62 $\mu$m; and a maximum thickness of 80 $\mu$m or 90 $\mu$m or 100 $\mu$m or 120 $\mu$m in another embodiment. In certain embodiments, a thickness of at least 54 $\mu$m or 58 $\mu$m or 60 $\mu$m or 62 $\mu$m provides the best cuttability.

The core layer of the oriented polypropylene film of the invention comprises polypropylene and within a range of from 20 wt% to 50 wt%, by weight of total materials in the core layer, of a propylene-$\alpha$-olefin elastomer having within a range of from 5 wt% to 25 wt% $\alpha$-olefin derived units, by weight of the propylene-$\alpha$-olefin elastomer. In one embodiment, the at least one core layer comprises polypropylene and within a range of from 25 wt% or 30 wt% to 40 wt% or 45 wt% or 50 wt%, by weight of total materials in the core layer, of a propylene-$\alpha$-olefin elastomer having within a range of from 5 wt% to 25 wt% $\alpha$-olefin derived units, by weight of the propylene-$\alpha$-olefin elastomer. Desirably, the polypropylene of the core layer has a melting point of greater than 120°C or 130°C and the propylene-$\alpha$-olefin elastomer has a melting point of less than 110°C.

The "polypropylene" is a homopolymer or copolymer comprising from 60 or 70 or 80 or 85 or 90 or 95 to 100 wt% propylene-derived units (and comprising within the range from 0 or 1 to 5 or 10 or 15 or 20 or 30 or 40 wt% $C_2$ and/or $C_4$ to $C_{10}$ $\alpha$-olefin derived units) and can be made by any desirable process using any desirable catalyst as is known in the art, such as a Ziegler-Natta catalyst, a metallocene catalyst, or other single-site catalyst, using solution, slurry, high pressure, or gas phase processes. In certain embodiments, the polypropylene has a melting point (ASTM D3418) of at least 120°C or 130°C or 140°C or 150°C or 160°C, or within a range of from 120°C to 150°C or 160°C.

In a particular embodiment the "polypropylene" is a polymer comprising from 96 wt% to 100 wt% propylene-derived units, and comprising from 0.1 or 0.2 or 0.5 to 1 or 2 or 4 or 6 wt% $C_2$ or $C_4$ to $C_{10}$ α-olefin derived units, made by any catalyst or process. Preferably, the polypropylenes have a melting point as described above. A "highly crystalline" polypropylene is polypropylene useful in certain embodiments, and is typically isotactic and comprises 100 wt% propylene-derived units (propylene homopolymer) and has a relatively high melting point of from greater than (greater than or equal to) 140°C or 145°C or 150°C or 155°C or 160°C or 165°C as measured by ASTM D3418.

The term "crystalline," as used herein, characterizes those polymers which possess high degrees of inter- and intra-molecular order. In certain embodiments, the polypropylene has a heat of fusion ($H_f$) greater than 60 J/g or 70 J/g or 80 J/g, as determined by DSC analysis. The heat of fusion is dependent on the composition of the polypropylene; the thermal energy for the highest order of polypropylene is estimated at 189 J/g, that is, 100% crystallinity is equal to a heat of fusion of 189 J/g. A polypropylene homopolymer will have a higher heat of fusion than a copolymer or blend of homopolymer and copolymer.

In any case, in certain embodiments, the polypropylene has a melt flow rate ("MFR", 230°C, 2.16 kg, ASTM D1238) within the range of from 0.1 g/10 min or 0.5 g/10 min or 1 g/10 min to 4 g/10 min or 6 g/10 min or 8 g/10 min or 10 g/10 min or 12 g/10 min or 16 g/10 min or 20 g/10 min. Also, in any case, the polypropylene may have a molecular weight distribution (determined by GPC) of from 1.5 or 2.0 or 2.5 to 3.0 or 3.5 or 4.0 or 5.0 or 6.0 or 8.0. Suitable grades of polypropylene, and, in particular, highly crystalline polypropylenes that are useful in oriented films include those made by ExxonMobil, LyondellBasell, Total, Borealis, Japan Polypropylene, Mitsui, and other sources.

To improve the squeezability of polypropylene, especially highly crystalline polypropylene, it is desirable to add an agent that is miscible with the polypropylene but adds some softness. As used herein, a "propylene-α-olefin elastomer" refers to a random copolymer that is elastomeric, has moderate crystallinity and possesses propylene-derived units and one or more units derived from ethylene, higher α-olefins, and/or optionally diene-derived units. Added to the core compositions herein are so called propylene-α-olefin elastomers which are propylene-based polymers having an intermediate amount of α-olefin such as within a range of from 5 wt% or 8 wt% or 10 wt% or 12 wt% to 18 wt% or 20 wt% or 22 wt% or 25 wt% α-olefin derived units. In some embodiments, where more than one comonomer is present, the amount of a particular comonomer may be less than 5 wt%, but the combined comonomer content is greater than 5 wt%. The propylene-α-olefin elastomers may be described by any number of different parameters, and those parameters may comprise a numerical range made up of any desirable upper limit with any desirable lower limit as described herein.

In certain embodiments, the propylene-α-olefin elastomer comprises ethylene or $C_4$-$C_{10}$ α-olefin-derived units (or "comonomer-derived units") within the range of 4 wt% or 7 wt% or 9 wt% to 13 wt% or 16 wt% or 18 wt% or 20 wt% or 25 wt% by weight of the elastomer. The propylene-α-olefin elastomer may also comprise two different comonomer-derived units. Also, these copolymers and terpolymers may comprise diene-derived units as described below. In a particular embodiment, the propylene-α-olefin elastomer comprises propylene-derived units and comonomer units selected from ethylene, 1-hexene, and 1-octene. And, in a more particular embodiment, the comonomer is ethylene and, thus, the propylene-α-olefin elastomer is a propylene-ethylene copolymer. When dienes are present, the propylene-α-olefin elastomer comprises less than 5 wt% or 3 wt%, by weight of the elastomer, of diene derived units, or within the range of from 0.1 wt% or 0.5 wt% or 1 wt% to 5 wt% in other embodiments. Suitable dienes include, for example: 1,4-hexadiene, 1,6-octadiene, 5-methyl-1,4-hexadiene, 3,7-dimethyl-1,6-octadiene, dicyclopentadiene (DCPD), ethylidene norbornene (ENB), norbornadiene, 5-vinyl-2-norbornene (VNB), and combinations thereof.

These propylene-α-olefin elastomers may have some isotactic polypropylene sequences but they also have some amorphous regions in the polymer chains, thus imparting desirable qualities to them and the compositions in which they are blended. In certain embodiments, the propylene-α-olefin elastomers have a melting point of less than 110°C or 100°C or 90°C or 80°C; and within the range of from 10°C or 15°C or 20°C or 25°C to 65°C or 75°C or 80°C or 95°C or 105°C or 110°C in other embodiments. One or a mixture of propylene-α-olefin elastomers may be present in the core compositions, preferably only one.

In certain embodiments, the propylene-α-olefin elastomers have a heat of fusion ($H_f$), determined according to the Differential Scanning Calorimetry (DSC) procedure described herein within the range of from 0.5 J/g or 1 J/g or 5 J/g to 35 J/g or 40 J/g or 50 J/g or 65 J/g or 75 J/g. In certain embodiments, the $H_f$ value is less than 75 J/g or 60 J/g or 50 J/g or 40 J/g. In certain embodiments, the propylene-α-olefin elastomers have a percent crystallinity within the range of from 0.5% to 40%, and from 1% to 30% in another embodiment, and from 5% to 25% in yet another embodiment, wherein "percent crystallinity" is determined according to the DSC procedure described herein. The thermal energy for the highest order of polypropylene is estimated at 189 J/g (i.e., 100% crystallinity is equal to 189 J/g).

In certain embodiments, the propylene-α-olefin elastomers have a melt flow rate ("MFR," ASTM D1238, 2.16 kg, 230°C), within the range of from 0.5 g/10 min or 1 g/10 min or 1.5 g/10 min or 2 g/10 min to 4 g/10 min or 6 g/10 min or 12 g/10 min or 16 g/10 min or 20 g/10 min in other embodiments.

In certain embodiments, the molecular weight distribution (MWD) of the propylene-α-olefin elastomers is within the range of from 1.5 or 1.8 or 2.0 to 3.0 or 3.5 or 4.0 or 5.0. Techniques for determining the molecular weight (Mn, Mz, and Mw) and molecular weight distribution (MWD) are as follows and as in Verstate et al. in 21 MACROMOLECULES 3360 (1988). Conditions described herein govern over published test conditions. Molecular weight and molecular weight distribution are measured using a Waters 150 gel permeation chromatograph equipped with a Chromatix KMX-6 on-line light scattering photometer. The system was used at 135°C with 1,2,4-trichlorobenzene as the mobile phase. Showdex™ (Showa-Denko America, Inc.) polystyrene gel columns 802, 803, 804 and 805 are used. This technique is discussed in LIQUID CHROMATOGRAPHY OF POLYMERS AND RELATED MATERIALS III 207 (J. Cazes ed., Marcel Dekker, 1981).

The propylene-$\alpha$-olefin elastomers described herein can be produced using any catalyst and/or process known for producing polypropylenes. In certain embodiments, the propylene-$\alpha$-olefin elastomers can include copolymers prepared according to the procedures in WO 02/36651; U.S. Patent No. 6,992,158; and/or WO 00/01745. Preferred methods for producing the propylene-$\alpha$-olefin elastomers are found in U.S. Patent Application Publication 2004/0236042 and U.S. Patent No. 6,881,800. Preferred propylene-$\alpha$-olefin elastomers are available commercially under the trade names Vistamaxx™ (ExxonMobil Chemical Company, Houston, TX, USA) and Versify™ (The Dow Chemical Company, Midland, Michigan, USA), certain grades of Tafmer™ XM or Notio™ (Mitsui Company, Japan) or certain grades of Clyrell™ and/or Sofitel™ (LyondellBasell Polyolefins of the Netherlands).

Each skin layer typically makes up from 1% or 2% to 4% or 5% or 6% of the entire skin/core/skin film.

In a particular embodiment, the printable skin layer consists of medium or high density polyethylene having a density within the range of from 0.930 g/cc or 0.935 g/cc to 0.945 g/cc or 0.950 g/cc or 0.955 g/cc or 0.960 g/cc or 0.970 g/cc; and a density of greater than 0.940 g/cc or 0.945 g/cc or 0.950 g/cc or 0.955 g/cc or 0.960 g/cc in other desirable embodiments. In desirable embodiments, the polyethylene making up the printable skin layer possess a melt index ("MI", 190°C, 2.16 kg) within the range of from 5 g/10 min or 10 g/10 min or 15 g/10 min or 20 g/10 min or 25 g/10 min to 35 g/10 min or 40 g/10 min or 50 g/10 min.

The adhesive-accepting skin layer comprises (or consists essentially of) within a range of from 60 wt% to 100 wt% (such as from 70 wt% or 80 wt% or 90 wt% to 100 wt%), by weight of total materials in the adhesive-accepting skin layer, of a polypropylene, and in particular, a polypropylene copolymer. In a particular embodiment, the adhesive-accepting skin layer is a propylene-ethylene copolymer having within the range of from 0.5 or 1 to 2 or 3 or 4 or 5 wt%, by weight of the copolymer, of ethylene-derived units. This layer accepts an adhesive for use in the pressure sensitive label industry as is well known in the art. It is this face, having the adhesive thereon, which can make up a "matrix" sheet of film that is adhered to a backing sheet. Cutters will cut individual labels from the matrix that can be pulled off and adhered to an article. In any case, what results in certain embodiments is a hollow, squeezable container having the polypropylene label described herein adhered thereto.

Claim 12 defines a method of forming an adhesive label according to the invention. However, the at least three-layer film or label of the claimed invention can be made by any suitable method known, and is preferably made by co-extruding the three layers together in the desired compositions and thicknesses. In certain embodiments, the films (or labels) herein may also be characterized as being biaxially oriented. Examples of methods of making the films for the labels include a tentered or blown process, LISIM™, and others. Further, the working conditions, temperature settings, lines speeds, etc. will vary depending on the type and the size of the equipment used. Nonetheless, described generally here is one method of making the labels described throughout this specification. In a particular embodiment, the films for the labels are formed and biaxially oriented using the "tentered" method. In the tentered process, line speeds of greater than 100 m/min to 400 m/min or more, and outputs of greater than 2000 kg/hr to 4000 kg/hr or more are achievable. In the tenter process, the various materials that make up the film layers are melt blended and coextruded, such as through a 3, 4, 5, 7-layer die head, into the desired label structure.

Downstream of the first cooling step in this embodiment of the tentered process, the unoriented film is reheated to a temperature of from 80°C to 100°C or 120°C or 150°C, in one embodiment by any suitable means such as heated S-wrap rolls, and then passed between closely spaced differential speed rolls to achieve machine direction orientation. It is understood by those skilled in the art that this temperature range can vary depending upon the equipment, and in particular, upon the identity and composition of the components making up the label. Ideally, the temperature will be below that which will melt the film, or cause it to become tacky and adhere to the equipment, but high enough to facilitate the machine direction orientation process. The heating means for the film line may be set at any appropriate level of heating, depending upon the instrument, to achieve the stated film temperatures.

The lengthened and thinned film is cooled and passed to the tenter section of the line for TD orientation. At this point, the edges of the sheet are grasped by mechanical clips on continuous chains and pulled into a long, precisely controlled hot air oven for a pre-heating step. The film temperatures range of from 100°C or 110°C to 150°C or 170°C or 180°C in the pre-heating step. Again, the temperature will be below that which will melt the film, or cause it to become tacky and adhere to the equipment, but high enough to facilitate the step of transverse direction orientation. Next, the edges of the sheet are grasped by mechanical clips on continuous chains and pulled into a long, precisely controlled hot air oven for transverse stretching. As the tenter chains diverge, a desired amount to stretch the film in the transverse direction, the film temperature is lowered by at least 2°C but typically no more than 20°C relative to the pre-heat temperature to maintain the film temperature so that it will not melt the film. After stretching to achieve transverse orientation in the film, the film is then cooled and the clips are released prior to edge trim, optional coronal, printing and/or other treatment can then take place, followed by winding. The steps are carried out for a sufficient time to affect the desired film properties as those skilled in the art will understand.

After forming the initial base multi-layer film or "sheet" which becomes the matrix with adhesive applied thereto, in certain embodiments, the film is treated on the printable skin layer to accept printing, the treatment selected from the group consisting of corona discharge, flame treatment, plasma treatment, chemical treatment (either permanent or temporary), polarized flame, and a combination thereof. The film may also be treated on the adhesive-accepting side by the same or different methods as well.

Chemical treatment includes both sacrificial treatment, such as by peroxides, fluoriding agents, and other oxidants or reductants, and permanent treatments such as one, two or more layers of coatings to promote greater ink, adhesive, and/or metal adhesion. Coatings are well known in the art, and particularly useful coatings include those based on polyalkylamines and modified polyalkylamines (e.g., acetylacetonate or glycidyl condensation products), acrylic and modified acrylic coatings, polyurethane coatings, polyvinyl alcohol and polyvinyl chloride coatings, coatings comprising micron-sized particulate fillers, and combinations of these materials. These can be used in one, two or more layers. A first or "primer" layer may comprise any one or combination of these, and is preferably an epoxy resin, polyurethane and/or polyalkylimine (e.g., polyethyleneimine). Other coatings includes layers of metal such as aluminum, or metal oxides such as aluminum oxide or silicon oxide. A chemical coating may be used in conjunction with a metal coating.

Desirably, the label can be cut at a minimum die pressure of 200 psi (1379 kPa) or 250 psi (1724 kPa). The labels are further characterized in that they can be cut from the matrix sheet and peeled from the backing layer, wherein the loss to the matrix is less than 20% or 15% or 10%. Other desirable properties of the label include a desirable level of stiffness, wherein the Gurley Stiffness (MD) is less than 15 mg or 14 mg or 13 mg or 12 mg or 10 mg, or within a range of from 9 mg or 10 mg to 14 mg or 15 mg or 16 mg; and the Gurley Stiffness (TD) is less than 40 mg or 35 mg or 30 mg or 28 mg or 25 mg, or within a range of from 10 mg or 12 mg to 18 mg or 20 mg.

As mentioned, the multi-layered films or labels can be used for various purposes, especially as an adhesive label with printed material thereon for bottles, cans, boxes, bags, plastic articles and devices, metal articles and devices, glass, and other surfaces that require conformability and squeezability.

What follows are non-limiting examples to assist with understanding of the invention(s) described above. It will be understood that films described as inventive illustrate principles of the invention. The scope of the invention is defined by the claims.

**EXAMPLES**

The different components of the films produced for the examples are described in Table 1. Unless otherwise stated, "MFR" is 230°C/2.16 kg (ASTM D1238) and "MI" is 190°C/2.16 kg; Flexural Modulus ("FM") is measured per ASTM D 790; density ("D") is measured per ASTM D 1505; melting point ("MP") is measured by DSC, as is the heat of fusion ($\Delta H_f$) determined as described above.

**Table 1. Description of Components**

| Component | Description | Source |
|---|---|---|
| **PP (core)** | propylene homopolymer, MP = 158-159°C, MFR= 2.8 g/10 min; FM = 800 MPa | ExxonMobil 4712 |
| $\alpha$-PP1 (core additive) | propylene random copolymer, MP 125°C, MFR= 5 g/10 min | Japan Polypropylene Corporation XPM-7700 |
| $\alpha$-PP2 (core additive) | propylene-$\alpha$-olefin elastomer, 11 wt% C2, MP = 79°C, $\Delta H_f$ = 14.7 J/g, MFR= 2 g/10 min | ExxonMobil Vistamaxx™ |
| $\alpha$-PP3 (core additive) | propylene-$\alpha$-olefin elastomer, 16 wt% C2, MP = 102°C, $\Delta H_f$ = 7.9 J/g, MFR= 3 g/10 min | ExxonMobil Vistamaxx™ |
| $\alpha$-PP4 (core additive) | ethylene-propylene copolymer MFR 0.6 g/10 min, MP = 141°C | LyondellBasell Softel™ Q020F |
| $\alpha$-EB5 (core additive) | ethylene-butene plastomer, D = 0.873 g/cc; MI 4.5 g/10 min (190/2.16); MP 52.8°C | ExxonMobil Exact™ 4049 |
| **skin (printable)** | high density polyethylene, D = 0.965 g/cc, MI = 3.0 g/10 min (190/2.16); FM = 1540 MPa | LyondellBasell (Equistar) Alathon™ M6030 |

(continued)

| Component | Description | Source |
|---|---|---|
| **skin (printable)** | medium density polyethylene, D = 0.941 g/cc, MI = 4 g/10 min (190/2.16) | Dow Dowlex™ 2027G |
| **skin (adhesive-accepting)** | ethylene-propylene copolymer, 2-3 wt% C2 MFR 6.8 g/10 min MP = 135°C | Total 8573HB |

The components in Table 1 are combined, as well known in the art, in the amounts shown for the "Core Compositions" in the Tables below. Each film also includes a skin layer adhered to both sides of the core layer, thus, forming a three-layer film having the core sandwiched there between. The skin layers are a co-extruded ethylene-propylene copolymer (Total 8573HB). The gauge ratios for the film layers are typically 2/96/2, where the total thickness is about 50 $\mu$m to 60 $\mu$m. Samples 1-27 were made on a "semiworks" line which includes a 3.5 inch (8.89 cm) extruder with L/D ratio of 32:1, single flight, double compression screw with a Maddock mixing head, smooth bore. Unless otherwise specified, the temperatures of the three zones in the TD tenter stretching unit are 355°F/320°F/315°F ($\pm$5°F), or 179°C/160°C/157°C ($\pm$3°C). The data for samples 1-9 in Table 2 are the initial, preliminary work to determine a target range for the materials; samples 10-27 in Tables 3 and 4 represent more refined sample films having desirable properties. Examples 28-34 in Table 5 are further refined examples. In Table 2, the "MFR" is for the additives. Data in Table 6 refers to selected examples of die-cutting. Blank spaces in the Tables mean that data was not recorded for those instances. The "Young's Modulus" is the equivalent of the Elastic Modulus or 1% Secant Modulus, measured per ASTM D 882; Gurley Stiffness measured per ASTM D6125-97 (2007); Gloss measured per ASTM D 2457; Handle-o-meter measured per ASTM D-2923.

Squeeze Testing Procedure:

1. The control K-Mart Head & Shoulders™ bottles are emptied and washed so there is no shampoo present.
2. The current labels are peeled off and any remaining adhesive cleaned with an alcohol wipe.
3. The new experimental labels are cut to the shape of the current bottle label.
4. The labels are hand applied at least 72 hours before testing.
5. The labeled bottles are stored at room temperature.
6. The control K-Mart Head & Shoulders bottle is set up with the following process settings:

- PI is the control valve for the pressurization step of the testing. PI is always set to 1.0 - 1.5 psi.
- P2 is the control valve for the vacuum step of the testing. P2 is always set to 45 - 50 psi.
- The rate or cycle of the squeeze test is set on the timer solenoid. The rate for the K-Mart Head & Shoulders bottle is 10 squeezes per minute. In the tables, the "squeeze scale" is from 1 to 5 (1 being the most squeezable, fewest defects) and the "squeeze rating" goes up to 80 (80 being the most squeezable).
- The test duration controls the number of squeezes the bottle is evaluated for. The test duration for the K-Mart Head & Shoulders bottle is 10 minutes.
- The test bottles are subjected to 100 squeezes.

7. The "squeezed" bottles are then evaluated for label defects. A table of the defects is produced. The results table columns include the Sample Name / Type, the Number of Test, the Number of Defects, the Number of Defects per Test, the Total Length of Defects, and the Maximum Defect Length.
8. The results table is used to evaluate the various film designs of the experiments.

The squeeze results are based on the number of squeezes till failure. The operator will record the failure of the samples on a scale from 0 - 5 (0 = bottle did not compress, 1 = no defect, 2 = slight defect, 3 = minor defect, 4 = unacceptable). The number of squeezes it takes for a sample to first receive a rating of a 3 is recorded, (for the No. 2 HDPE bottle). The test cycle consists of 75 squeezes, so if a sample receives a 1 or 2 for all 75 squeezes, the operator gives that sample a score of 80. The higher the number (rating) means the more squeezes the label was able to withstand before a defect was seen by the operator.

Die Cutting & Dispensing Test: Sheets of the polypropylene label adhered to a liner or "backing sheet" were tested for its ability to be cleanly cut without the label sticking to the surrounding "matrix" and without adhesive being pushed into the backing sheet and preventing or impeding removal of labels. The die gap is the gap set between the farthest downward point of the blade when cutting the labels from the sheet and the platen upon which the entire sheet moved upon. This allows, ideally, cutting of the label only and not the backing sheet. The ".jog" speed is a speed of from 10 - 20 feet/min ("fpm") (3-6 m/min) that the sheet moves along the platen, while the "run" speed represents speeds closer to commercial runs, at 400 fpm (120 m/min). The "Labels Lost to Matrix" test is a test of pulling the matrix material away from the cut labels and backing sheet, leaving only the labels adhered to the backing sheet. The "Ticker Test" is a test of hand-pulling individual labels away from the backing sheet with the matrix still adhered. The "minimum die pressure" is simply the pressure placed on the cutting knife to cut the label.

More particularly, the die cut test performed using an Allied Gear Flexomaster 1B die cut machine. The test was done on Label-Aire Incorporated Model 2115-M label dispensing applicator. The face stock film to be tested was adhesive laminated to 1.5 mil (38 µm) PET release liner to form the pressure sensitive label stock. The adhesive coating weight was usually about 5 - 20 lbs (2 - 9 kg) per ream. The solvent based adhesive used was COVINAX™ 462 acrylic emulsion adhesive from Franklin Adhesive and Polymers.

The sandwiched structure was passed through the die cut machine with the cut gap set at 1.4 mil (36 µm) (liner is 1.5 mil (38 µm) thick), and cutting pressure set at 250 psi (1724 kPa) or 400 psi (2757 kPa). The face stock to be cut into individual labels was facing up toward the cutting die. After the die cut step, the matrix was stripped, leaving individual cut labels sitting on the release liner. The matrix was run at a stripping speed at jog speed (very low speed) or at high speed (400 fpm (120 m/min)). Ideally, there would be no label lost during the matrix stripping step. If the cut is not complete, or cut too much, then, labels are lost during the stripping step. Then, the liner was stained after all labels removed. If the cut was too deep, dye will penetrate the release coating and stain the paper liner. When cutting too deep, the sticky adhesive could be pushed into the cut slit and the label may not strip off easily.

For the dispensing test, the roll of pressure sensitive label was run through the dispensing applicator at jog (low) speed, and at 150 labels per minute. The continuous liner was pulled downward at a sharp angle on the edge of the dispensing plate. The liner pulled away at the bending angle will leave the die-cut face stock to stick up and out in the air horizontally. Gravity will cause the stuck out label to bend down. The bending angle is related to the stiffness of the face stock (label film). The stiffer the film, the smaller the bending down angle. When the label's bending down angle is too big, the film will curl and cannot reach the object that will pick up the label at the dispensing plate area. Therefore, usually a smaller dispensing angle is preferred.

When the face stock is very stiff, it will have less bending down angle at the dispensing plate, making it easier to dispense. After applied to a plastic bottle, the stiff film may have a "darting" problem. The darting problem can occur when a label applied to a bottle separates from the bottle, leaving a dart shape gap (non-conformable), when the bottle is deformed or "squeezed" down. A balance of film softness/stiffness properties is sought that will provide acceptable label dispensing as well as conformability after applied to a plastic bottle. A lower rating is better with 1 as very good, 4 is average.

Tables 5a, 5b, and 6 are a summary of preliminary results of die cutting experiments on the inventive films, showing the failure rate is low for inventive films. Tables 6 and 7 are further experiments to show the advantageous properties of the inventive films. These results suggest that higher film gauge is better (2.5 mil vs. 2 mil (64 µm vs. 50 µm)).

L&W Stiffness Test. ISO 5628 (1991). A 1.5 inch (3.8 cm) wide specimen is bent at 15°, pushing 5 mm far from specimen holder. It is not said in the procedure, but the bending force measured in mN is calculated by the JBL PTM to express the rigidity in mN•m in the final extracted results table, following the relationship:

$$S = (60 \cdot F \cdot L2) / (pi \cdot a \cdot b)$$

where

- S = Stiffness / Rigidity in mN•m;

- F = measure Force in N;

- L = bent length in mm (= 5 mm);

- a = bending angle in degree (= 15°); and

- b = specimen width in mm (38 mm = 1.5").

A lower rating is desirable. However, this does not include printability comparisons. For printability, LLDPE 2027G surface is better than M-6030 surface.

In the Tables, when "wt% additive" is mentioned, this means the weight percent of that component based on the total weight of materials for that layer, such as the core layer.

TABLE 2. FILM CORE COMPOSITIONS AND TEST DATA FOR SAMPLES 1-9

| SAMPLE NUMBER | CORE: PP + ADDITIVE | CORE ADDITIVE WT% LOADING | TOTAL GAUGE (mils) | MFR @ 230°C (g/ 10 MIN) | YOUNG'S MOD MD (kpsi) | YOUNG'S MOD TD (kpsi) | GURLEY STIFFNESS MD (mg) | GURLEY STIFFNESS TD (mg) | HAZE (%) | GLOSS @45°(%) OUT | SQUEEZE SCALE |
|---|---|---|---|---|---|---|---|---|---|---|---|
| 1 | α-PP1 | 50 | 2 (0.05 mm) | 5.5 | 196 (1350 MPa) | 243 (1680 MPa) | 15 | 16 | 2.1 | 83 | 3 |
| 2 | - | - | 2 (0.05 mm) | 2.8 | 277 (1910 MPa) | 420 (2900 MPa) | 14 | 31 | 2.4 | 81 | 5 |
| 3 | α-PP2 | 25 | 2 (0.05 mm) | 2.2 | 99 (680 MPa) | 163 (1120 MPa) | 13 | 22 | 3.7 | 78 | 3 |
| 4 | α-PP2 | 35 | 2 (0.05 mm) | 2.2 | 73 (503 MPa) | 142 (979 MPa) | 7 | 11 | 3.2 | 79 | 1 |
| 5 | α-PP3 | 25 | 2 (0.05 mm) | 3 | 104 (717 MPa) | 241 (1660 MPa) | 8 | 13 | 4.8 | 82 | 1 |
| 6 | α-PP3 | 35 | 2 (0.05 mm) | 3 | 63 (430 MPa) | 163 (1120 MPa) | 10 | 63 | 7.6 | 79 | 1 |
| 7 | α-PP4 | 15 | 2 (0.05 mm) | 0.6 | 145 (1000 MPa) | (1960 MPa) | 9 | 14 | 23.1 | 55 | 3 |
| 8 | α-PP5 | 20 | (0.05 mm) | 4.5 | 129 (889 MPa) | 294 (2030 MPa) | 8 | 15 | 27.1 | 73 | 5 |
| 9 | α-PP3 | 25 | 2.4 (0.061 mm) | 3 | 87 (600 MPa) | 105 (724 MPa) | 11 | 20 | 7.1 | 79 | 5 |

EP 2 747 998 B1

TABLE 3. FILM CORE COMPOSITIONS FOR SAMPLES 10-27

| SAMPLE NUMBER | PRINT SKIN (5 GAUGE) | CORE: XOM 4712 RESIN + ADDITIVE RESIN | ADDITIVE RESIN wt% | ADHESIVE SKIN (5 GAUGE) | TOTAL FILM THICKNESS (mils) |
|---|---|---|---|---|---|
| 10 | 8573HB | - | - | 8573HB | 2.09 (53.1 $\mu$m) |
| 11 | 8573HB | $\alpha$-PP3 | 10 | 8573HB | 2.05 (52.1 $\mu$m) |
| 12 | 8573HB | $\alpha$-PP3 | 17.5 | 8573HB | 2.07 (52.6 $\mu$m) |
| 13 | 8573HB | $\alpha$-PP3 | 25 | 8573HB | 2.09 (53.1 $\mu$m) |
| 14 | M-6030 | $\alpha$-PP3 | 25 | 8573HB | 2.1 (53 $\mu$m) |
| 15 | 2027G | $\alpha$-PP3 | 25 | 8573HB | 2.06 (52.3 $\mu$m) |
| 16 | 8573HB | $\alpha$-PP3 | 10 | 8573HB | 2.46 (62.5 $\mu$m) |
| 17 | 8573HB | $\alpha$-PP2 | 17.5 | 8573HB | 2.52 (64.2 $\mu$m) |
| 18 | 8573HB | $\alpha$-PP3 | 17.5 | 8573HB | 2.51 (63.8 $\mu$m) |
| 19 | M-6030 | $\alpha$-PP3 | 17.5 | 8573HB | 2.48 (63.0 $\mu$m) |
| 20 | 2027G | $\alpha$-PP2 | 17.5 | 8573HB | 2.34 (59.4 $\mu$m) |
| 21 | 2027G | $\alpha$-PP3 | 17.5 | 8573HB | 2.45 (62.2 $\mu$m) |
| 22 | 2027G | $\alpha$-PP3 | 25 | 8573HB | 2.49 (63.2 $\mu$m) |
| 23 | M-6030 | $\alpha$-PP3 | 17.5 | 8573HB | 2.35 (57.0 $\mu$m) |
| 24 | M-6030 | $\alpha$-PP3 | 21 | 8573HB | 2.38 (60.5 $\mu$m) |
| 25 | M-6030 | $\alpha$-PP3 | 25 | 8573HB | 2.3 (58 $\mu$m) |
| 26 | 2027G | $\alpha$-PP3 | 21 | 8573HB | 2.25 (57.2 $\mu$m) |
| 27 | 2027G | $\alpha$-PP3 | 25 | 8573HB | 2.35 (59.7 $\mu$m) |

TABLE 4. SAMPLE FILMS 10-27 PROCESS DATA AND TEST DATA

| SAMPLE NUMBER | TDO TEMPS (°C) | TD AMPS | YOUNG'S MOD MD (kpsi) | YOUNG'S MOD TD (kpsi) | GURLEY STIFFNESS MD (mg) | GURLEY STIFFNESS TD (mg) | HAZE (%) | GLOSS @ 45° (%) OUT | SQUEEZE RATING |
|---|---|---|---|---|---|---|---|---|---|
| 10 | 189/167/160 | 17 | 302 (2080 MPa) | 448 (3080 MPa) | 15.1 | 24 | 2.38 | 80.8 | 5 |
| 11 | 181/162/157 | 18 | 178.5 (1231 MPa) | 305.5 (2106 MPa) | 12.42 | 18.72 | 5.23 | 80.3 | 25 |
| 12 | 177/161/157 | 22 | 141.5 (975.6 MPa) | 288.5 (1989 MPa) | 10.19 | 13.99 | 4.05 | 81.6 | 35 |
| 13 | 163/158/156 | 21 | 98.5 (679 MPa) | 231.5 (1596 MPa) | 7.88 | 12.6 | 5.47 | 81 | 25 |
| 14 | 163/157/156 | 23.4 | 115.5 (796.3 MPa) | 240 (1650 MPa) | 9.36 | 15.85 | 5.77 | 74 | 67.5 |
| 15 | 158/157/156 | 20 | 112 (772 MPa) | 218 (1503 MPa) | 8.15 | 12.51 | 4.43 | 81.1 | 45 |
| 16 | - | - | 172.5 (1189 MPa) | 295.5 (2307 MPa) | 15.43 | 25.48 | 3.76 | - | 57.5 |
| 17 | 177/160/159 | 23 | 154 (1060 MPa) | 233.67 (1611.1 MPa) | 13.81 | 24.74 | 2.92 | 82.4 | 67.5 |
| 18 | - | - | 133 (917 MPa) | 235.5 (1624 MPa) | 11.49 | 19.64 | 5.67 | - | 35 |
| 19 | - | - | 186.5 (1286 MPa) | 246.5 (1700 MPa) | 12.93 | 19.92 | 6.44 | - | 80 |
| 20 | 177/160/159 | 27 | 167 (1150 MPa) | 254 (1750 MPa) | 13 | 21.5 | 2.18 | 84.5 | 60 |
| 21 | - | - | 126 (869 MPa) | 246.5 (1700 MPa) | 12.05 | 21.59 | 5.1 | - | 45 |
| 22 | - | - | 95 (660 MPa) | 183 (1260 MPa) | 10.29 | 17.33 | 8.78 | - | 80 |
| 23 | - | - | 123.5 (851.5 MPa) | 232 (1600 MPa) | 9.2 | 15.29 | 6.77 | 77.3 | 35 |
| 24 | - | - | 74.33 (512.5 MPa) | 179 (1230 MPa) | 7.69 | 13.44 | 8.19 | 74.8 | 80 |
| 25 | - | - | 104 (717 MPa) | 200.5 (1382 MPa) | 7.78 | 13.25 | 7.38 | 72.5 | 45 |
| 26 | - | - | 107 (738 MPa) | 215.5 (1486 MPa) | 7.2 | 13.21 | 6.19 | 80.1 | 72.5 |
| 27 | - | - | 67.5 (465 MPa) | 169.5 (1169 MPa) | 7.04 | 12.51 | 6.87 | 79.8 | 60 |

TABLE 5A. DIE CUTTING EXAMPLE COMPOSITIONS

| INVENTIVE A - LOW GAUGE | | | | |
|---|---|---|---|---|
| STRUCTURE | RESINS | | | |
| CORONA TREATED - PRINT SIDE | % | TRADE NAME | TARGET POLY GAUGE (mil) | % OF TOTAL |
| HDPE | 100 | EQUISTAR M-6030 | 0.05 (1 $\mu$m) | 2 |
| $\alpha$-PP3 + PP | 25 + 75 | $\alpha$-PP3 + XOM 4712 | 1.9 (48 $\mu$m) | 96 |
| PP COPOLYMER | 100 | TOTAL 8573 HB | 0.05 (1 $\mu$m) | 2 |
| | | TARGET GAUGE: | 2.0 (51 $\mu$m) | |
| COMPARATIVE A - LOW GAUGE | | | | |
| STRUCTURE | RESINS | | | |
| CORONA TREATED - PRINT SIDE | % | TRADE NAME | TARGET POLY GAUGE (mil) | % OF TOTAL |
| MDPE | 100 | DOWLEX 2027G | 0.05 (1 $\mu$m) | 2 |
| $\alpha$-PP3 + PP | 25 + 75 | $\alpha$-PP3 + XOM 4712 | 1.9 (48 $\mu$m) | 96 |
| PP COPOLYMER | 100 | TOTAL 8573 HB | 0.05 (1 $\mu$m) | 2 |
| | | TARGET GAUGE: | 2.0 (51 $\mu$m) | |

TABLE 5B. DIE CUTTING EXAMPLE COMPOSITIONS

| INVENTIVE B - HIGH GAUGE | | | | |
|---|---|---|---|---|
| STRUCTURE | RESINS | | | |
| CORONA TREATED - PRINT SIDE | % | TRADE NAME | TARGET POLY GAUGE (mil) | % OF TOTAL |
| HDPE | 100 | EQUISTAR M-6030 | 0.05 (1 $\mu$m) | 2 |
| $\alpha$-PP3 + PP | 17.5 + 82.5 | $\alpha$-PP3 + XOM 4712 | 2.3 (58 $\mu$m) | 96 |
| PP COPOLYMER | 100 | TOTAL 8573 HB | 0.05 (1 $\mu$m) | 2 |
| | | TARGET GAUGE: | 2.4 (61 $\mu$m) | |
| INVENTIVE B - HIGH GAUGE | | | | |
| STRUCTURE | RESINS | | | |
| CORONA TREATED - PRINT SIDE | % | TRADE NAME | TARGET POLY GAUGE (mil) | % OF TOTAL |
| MDPE | 100 | DOWLEX 2027G | 0.05 (1 $\mu$m) | 2 |
| $\alpha$-PP3 + PP | 25 + 75 | $\alpha$-PP3 + XOM 4712 | 2.3 (5.8 $\mu$m) | 96 |
| PP COPOLYMER | 100 | TOTAL 8573 HB | 0.05 (1 $\mu$m) | 2 |
| | | TARGET GAUGE: | 2.4 (61 $\mu$m) | |

TABLE 6. DIE CUTTING PRESSURE AND FAILURES

| EXAMPLE | MINIMUM DIE PRESSURE NEEDED (psi) | NO LABELS LOST TO MATRIX AT JOG SPEED (%) | NO LABELS LOST TO MATRIX AT 400 FPM (%) | TICKER TEST (% LOSS) |
|---|---|---|---|---|
| INV. A | 250 (1.7 MPa) | 10-15 | 1-2 | 20 |
| INV. A | 400 (2.8 MPa) | 10 | 0 | |
| COMP A | 250 (1.7 MPa) | 100 | 100 | 67 |
| COMP A | 400 (2.8 MPa) | 10 | 0 | |
| INV. B | 250 (1.7 MPa) | 0 | 0 | 0 |
| INV. B | 200 (1.4 MPa) | 0 | 0 | |
| INV. B | 250 (1.7 MPa) | 100 | 100 | 20 |
| INV. B | 400 (2.8 MPa) | 0 | 0 | |

TABLE 7. SAMPLE FILMS 28-34 PROCESS DATA AND TEST DATA

| FILM STRUCTURE | | | | SAMPLE NUMBER | YOUNG'S MODULUS | | GURLEY STIFFNESS | | HANDLE-O-METER STIFF-NESS | | L&W STIFF-NESS | | HAZE | GLOSS @ 45° OUT | SQUEEZE RATING |
|---|---|---|---|---|---|---|---|---|---|---|---|---|---|---|---|
| SKIN-1 (0.05 mil) (1 $\mu$m) | CORE LAYER PP + ADDITIVE | | SKIN-2 (0.05 mil) (1 $\mu$m) | | MD (kpsi) | TD (kpsi) | MD (mg) | TD (mg) | MD (mg) | TD (mg) | MD (mNm) | TD | (%) | (%) | |
| PRINT SKIN | CORE: PP + ADDITIVE | CORE: ADDITIVE RESIN WT% | ADHESIVE SKIN | FILM GAUGE (mil) | | | | | | | | | | | |
| HDPE M-6030 | $\alpha$-PP3 | 17.5 | 8573HB | 2.4 (61 $\mu$m) | 28 | 124 (855 MPa) | 232 (1600 MPa) | 9.2 | 15.3 | 56.3 | 82.5 | 16.5 | 26.8 | 6.8 | 77 | 35 |
| HDPE M-6031 | $\alpha$-PP3 | 21 | 8573HB | 2.4 (61 $\mu$m) | 29 | 74 (510 MPa) | 179 (1230 MPa) | 7.7 | 13.4 | 46.3 | 72.3 | - | - | 8.2 | 75 | 80 |
| HDPE M-6030 | $\alpha$-PP3 | 25 | 8573HB | 2.12 (56 $\mu$m) | 30 | 104 (717 MPa) | 201 (1390 MPa) | 7.8 | 13.3 | 47.9 | 37.5 | 14.9 | 25.1 | 7.4 | 73 | 45 |
| LLDPE 2027G | $\alpha$-PP3 | 21 | 8573HB | 2.3 (58 $\mu$m) | 31 | 107 (738 MPa) | 216 (1490 MPa) | 7.2 | 13.2 | 45.9 | 69.4 | - | - | 6.2 | 80 | 73 |
| LLDPE 2027G | $\alpha$-PP3 | 25 | 8573HB | 2.4 (61 $\mu$m) | 32 | 68 (470 MPa) | 170 (1170 MPa) | 7.0 | 12.5 | 43.5 | 68.9 | 14.2 | 24.7 | 6.9 | 80 | 60 |
| LLDPE 2027G | $\alpha$-PP3 | 17.5 | 8573HB | 2.5 (64 $\mu$m) | 33 | 112 (772 MPa) | 241 (1660 MPa) | 11.0 | 21.2 | 66.7 | 106 | - | - | 5.2 | 81 | 81 |
| LLDPE 2027G | $\alpha$-PP3 | 20 | 8573HB | 2.5 (64 $\mu$m) | 34 | 105 (724 MPa) | 223 (1540 MPa) | 10.6 | 19.7 | 61.5 | 99.7 | - | - | 6.3 | 79 | 79 |

EP 2 747 998 B1

TABLE 8. SELECTED DIE CUTTING EXAMPLES

| SAMPLE NUMBER | FILM STRUCTURE | | | | | YOUNG'S MODULUS | | GURLEY STIFFNESS | | HAZE | SQUEEZE SCALE | SQUEEZE RATING | DIE CUT-TING | MATRIX DIS-PENSING |
|---|---|---|---|---|---|---|---|---|---|---|---|---|---|---|
| | SKIN-1 (0.05 mil) (1 $\mu$m) | CORE LAYER PP + ADDITIVE RESIN | | SKIN-2 (0.05 mil) (1 $\mu$m) | TOTAL GAUGE | MD (kpsi) | TD (kpsi) | MD (mg) | TD (mg) | (%) | | | | |
| | PRINT SKIN | ADDITIVE | WT% ADDITIVE IN CORE | ADHESIVE SKIN | (mils) | | | | | | | | | |
| 14 | HDPE M-6030 | $\alpha$-PP3 | 25 | 8573HB | 2 (50 $\mu$m) | 116 (800 MPa) | 240 (1650 MPa) | 9.4 | 15.9 | 5.8 | 1 | 68 | 2 | 2 |
| 15 | LLDPE 2027G | $\alpha$-PP3 | 25 | 8573HB | 2 (50 $\mu$m) | 112 (772 MPa) | 218 (1500 MPa) | 8.2 | 12.5 | 4.4 | 1 | 45 | 4 | 2 |
| 19 | HDPE M-6030 | $\alpha$-PP3 | 17.5 | 8573HB | 2.5 (64 $\mu$m) | 187 (1290 MPa) | 247 (1700 MPa) | 12.9 | 19.9 | 6.4 | 1 | 80 | 1 | 1 |
| 22 | LLDPE 2027G | $\alpha$-PP3 | 25 | 8573HB | 2.5 (64 $\mu$m) | 95 (660 MPa) | 183 (1260 MPa) | 10.3 | 17.3 | 8.8 | 1 | 80 | 2 | 1 |

**Claims**

1. An oriented polypropylene film comprising at least one core layer sandwiched between at least two skin layers, the layers comprising:

   (i) a core layer comprising polypropylene and within a range of from 20 wt% to 50 wt%, by weight of total materials in the core layer, of a propylene-α-olefin elastomer having within a range of from 5 wt% to 25 wt% α-olefin derived units, by weight of the propylene-α-olefin elastomer;
   (ii) a printable skin layer consisting of medium-density polyethylene or high-density polyethylene; and
   (iii) an adhesive-accepting skin layer comprising within a range of from 60 wt% to 100 wt%, by weight of total materials in the adhesive-accepting skin layer, of a polypropylene;

   wherein the oriented polypropylene film has a machine direction ("MD") elastic modulus (ASTM 882) of at least 80 kpsi (551 MPa); and a haze (ASTM D 1003) value of less than 10%.

2. The oriented polypropylene film of claim 1, wherein the core layer consists essentially of the propylene α-olefin elastomer and the polypropylene.

3. The oriented polypropylene film of claim 1, wherein the layers (i) through (iii), cumulatively, have a thickness of at least 50 μm.

4. The oriented polypropylene film of claim 1, wherein the core layer comprises the polypropylene and within the range of from 25 wt % to 45 wt %, by weight of the total materials in the core layer, of a propylene α-olefin elastomer.

5. The oriented polypropylene film of claim 1, wherein the polypropylene of the core layer has a melting point of greater than 120°C and the propylene-α-olefin elastomer has a melting point of less than 110°C.

6. The oriented polypropylene film of claim 1, wherein the oriented polypropylene film has a transverse direction ("TD") elastic modulus (ASTM 882) of at least 200 kpsi (1379 MPa).

7. The oriented polypropylene film of claim 1, wherein the oriented polypropylene film has a Gurley Stiffness (MD, ASTM D6125-97 (2001)) less than 15 mg.

8. The oriented polypropylene film of claim 1, wherein the core layer comprises within a range of from 30 wt% to 50 wt%, by weight of total materials in the core layer, of the propylene-α-olefin elastomer.

9. The oriented polypropylene film of claim 1, wherein the core layer comprises within a range of from 40 wt% to 50 wt%, by weight of total materials in the core layer, of the propylene-α-olefin elastomer.

10. A label formed from the oriented polypropylene film of claim 1 comprising the oriented polypropylene film with a backing sheet adhered to the adhesive-accepting skin layer with an adhesive there-between.

11. A hollow, squeezable container having the label of claim 10 adhered thereto.

12. A method of forming an adhesive label comprising:

    (1) coextruding at least a three-layer film comprising:

       (i) a core layer comprising polypropylene and within a range of from 20 wt% to 50 wt%, by weight of total materials in the core layer, of a propylene-α-olefin elastomer having within a range of from 5 wt% to 25 wt% α-olefin derived units, by weight of the propylene-α-olefin elastomer;
       (ii) a printable skin layer consisting of medium-density polyethylene or high-density polyethylene; and
       (iii) an adhesive-accepting skin layer comprising within a range of from 60 wt% to 100 wt%, by weight of total materials in the adhesive-accepting skin layer, of a polypropylene;

    (2) orienting the at least a three-layer film;
    (3) attaching an adhesive to the adhesive-accepting skin layer of the at least a three-layer film;
    (4) attaching a backing sheet to the at least a three-layer film having the adhesive there-between, thus forming an adhesive sheet of the at least a three-layer film; and

(5) cutting the adhesive sheet in a form of a label with a cutting die at a die gap within a range of from 25 $\mu$m to 75 $\mu$m and a minimum die pressure of greater than 200 psi (1379 kPa);

wherein the oriented polypropylene film and has a machine direction ("MD") elastic modulus (ASTM 882) of at least 80 kpsi (551 MPa); and a haze (ASTM D 1003) value of less than 10%.

**13.** The method of claim 12, further comprising peeling, subsequent to the cutting, the adhesive label from the backing layer; wherein a loss to a matrix is less than 20%.

**14.** The method of claim 12, wherein the core layer consists essentially of the propylene-$\alpha$-olefin elastomer and the polypropylene.

**15.** The method of claim 12, wherein the core layer comprises polypropylene and within a range of from 25 wt% to 45 wt%, by weight of materials in the core layer, of a propylene-$\alpha$-olefin elastomer.

**16.** The method of claim 12, wherein the printable skin layer is treated to accept printing, a treatment selected from a group consisting of corona discharge, flame treatment, plasma treatment, chemical treatment that is either permanent or temporary, polarized flame, and a combination thereof.

**17.** The method of claim 12, wherein the adhesive label has a transverse direction ("TD") elastic modulus (ASTM 882) of at least 200 kpsi (1379 MPa).

**18.** The method of claim 12, wherein the core layer comprises within a range of from 30 wt% to 50 wt%, by weight of total materials in the core layer, of the propylene-$\alpha$-olefin elastomer.

**19.** The method of claim 12, wherein the core layer comprises within a range of from 40 wt% to 50 wt%, by weight of total materials in the core layer, of the propylene-$\alpha$-olefin elastomer.

**Patentansprüche**

**1.** Orientierte Polypropylenfolie mit mindestens einer Kernschicht, die sandwichartig zwischen zwei Deckschichten angeordnet ist, wobei die Schichten Folgendes umfassen:

(i) eine Kernschicht, umfassend Polypropylen und in einem Bereich von 20 Gew.-% bis 50 Gew.-%, bezogen auf das Gewicht aller Materialien in der Kernschicht, eines Propylen-$\alpha$-Olefin-Elastomers, das in einem Bereich von 5 Gew.-% bis 25 Gew.-% von $\alpha$-Olefin abgeleitete Einheiten, bezogen auf das Gewicht des Propylen-$\alpha$-Olefin-Elastomers, aufweist;

(ii) eine bedruckbare Deckschicht, die aus Polyethylen mittlerer Dichte oder Polyethylen hoher Dichte besteht; und

(iii) eine klebstoffannehmende Deckschicht, die in einem Bereich von 60 Gew.-% bis 100 Gew.-%, bezogen auf das Gewicht aller Materialien in der klebstoffannehmenden Deckschicht, eines Polypropylens umfasst;

wobei die orientierte Polypropylenfolie einen Elastizitätsmodul (ASTM 882) in Maschinenrichtung ("MD") von mindestens 80 kpsi (551 MPa) und einen Trübungswert (ASTM D 1003) von weniger als 10 % aufweist.

**2.** Orientierte Polypropylenfolie nach Anspruch 1, wobei die Kernschicht im Wesentlichen aus dem Propylen-a-Olefin-Elastomer und dem Polypropylen besteht.

**3.** Orientierte Polypropylenfolie nach Anspruch 1, wobei die Schichten (i) bis (iii) zusammengenommen eine Dicke von mindestens 50 $\mu$m aufweisen.

**4.** Orientierte Polypropylenfolie nach Anspruch 1, wobei die Kernschicht das Polypropylen und im Bereich von 25 Gew.-% bis 45 Gew.-%, bezogen auf das Gewicht aller Materialien in der Kernschicht, eines Propylen-$\alpha$-Olefin-Elastomers umfasst.

**5.** Orientierte Polypropylenfolie nach Anspruch 1, wobei das Polypropylen der Kernschicht einen Schmelzpunkt von mehr als 120 °C aufweist und das Propylen-α-Olefin-Elastomer einen Schmelzpunkt von weniger als 110 °C aufweist.

6. Orientierte Polypropylenfolie nach Anspruch 1, wobei die orientierte Polypropylenfolie einen Elastizitätsmodul (ASTM 882) in Querrichtung ("TD") von mindestens 200 kpsi (1379 MPa) aufweist.

7. Orientierte Polypropylenfolie nach Anspruch 1, wobei die orientierte Propylenfolie eine Gurley-Steifigkeit (MD, ASTM D6125-97 (2001)) von weniger als 15 mg aufweist.

8. Orientierte Polypropylenfolie nach Anspruch 1, wobei die Kernschicht in einem Bereich von 30 Gew.-% bis 50 Gew.-%, bezogen auf das Gewicht aller Materialien in der Kernschicht, des Propylen-α-Olefin-Elastomers umfasst.

9. Orientierte Polypropylenfolie nach Anspruch 1, wobei die Kernschicht in einem Bereich von 40 Gew.-% bis 50 Gew.-%, bezogen auf das Gewicht aller Materialien in der Kernschicht, des Propylen-α-Olefin-Elastomers umfasst.

10. Etikett, gebildet aus der orientierten Polypropylenfolie nach Anspruch 1, umfassend die orientierte Polypropylenfolie mit einer auf die klebstoffannehmende Deckschicht aufgeklebten Rückschicht mit einem Klebstoff dazwischen.

11. Hohler, zusammendrückbarer Behälter mit dem Etikett nach Anspruch 10, das darauf aufgeklebt ist.

12. Verfahren zum Bilden eines Haftetiketts, umfassend:

(1) Coextrudieren mindestens einer dreischichtigen Folie, umfassend:

(i) eine Kernschicht, umfassend Polypropylen und in einem Bereich von 20 Gew.-% bis 50 Gew.-%, bezogen auf das Gewicht aller Materialien in der Kernschicht, eines Propylen-α-Olefin-Elastomers, das in einem Bereich von 5 Gew.-% bis 25 Gew.-% von α-Olefin abgeleitete Einheiten, bezogen auf das Gewicht des Propylen-α-Olefin-Elastomers, aufweist;
(ii) eine bedruckbare Deckschicht, die aus Polyethylen mittlerer Dichte oder Polyethylen hoher Dichte besteht; und
(iii) eine klebstoffannehmende Deckschicht, die in einem Bereich von 60 Gew.-% bis 100 Gew.-%, bezogen auf das Gewicht aller Materialien in der klebstoffannehmenden Deckschicht, eines Polypropylens umfasst;

(2) Orientieren der mindestens dreischichtigen Folie;
(3) Aufbringen eines Klebstoffs auf die klebstoffannehmende Deckschicht der mindestens dreischichtigen Folie;
(4) Anbringen einer Rückschicht auf der mindestens dreischichtigen Folie mit dem Klebstoff dazwischen und somit Bilden eines Klebeblatts der mindestens dreischichtigen Folie und
(5) Stanzen des Klebeblatts in Form eines Etiketts mit einem Stanzwerkzeug bei einem Werkzeugspalt in einem Bereich von 25 μm bis 75 μm und einem minimalen Werkzeugdruck von mehr als 200 psi (1379 kPa);

wobei die orientierte Polypropylenfolie einen Elastizitätsmodul (ASTM 882) in Maschinenrichtung ("MD") von mindestens 80 kpsi (551 MPa) und einen Trübungswert (ASTM D 1003) von weniger als 10 % aufweist.

13. Verfahren nach Anspruch 12, ferner umfassend das Abziehen des Klebeetiketts von der Rückschicht nach dem Stanzen, wobei ein Verlust an einer Matrix weniger als 20 % beträgt.

14. Verfahren nach Anspruch 12, wobei die Kernschicht im Wesentlichen aus dem Propylen-α-Olefin-Elastomer und dem Polypropylen besteht.

15. Verfahren nach Anspruch 12, wobei die Kernschicht Polypropylen und in einem Bereich von 25 Gew.-% bis 45 Gew.-%, bezogen auf das Gewicht der Materialien in der Kernschicht, eines Propylen-α-Olefin-Elastomers umfasst.

16. Verfahren nach Anspruch 12, bei dem die bedruckbare Deckschicht zur Annahme von Bedruckungen behandelt wird, eine Behandlung aus der Gruppe bestehend aus Koronaentladung, Flammenbehandlung, Plasmabehandlung, chemischer Behandlung, die entweder permanent oder temporär ist, polarisierter Flamme und einer Kombination davon.

17. Verfahren nach Anspruch 12, wobei das Klebeetikett einen Elastizitätsmodul (ASTM 882) in Querrichtung ("TD") von mindestens 200 kpsi (1379 MPa) aufweist.

**18.** Verfahren nach Anspruch 12, wobei die Kernschicht in einem Bereich von 30 Gew.-% bis 50 Gew.-%, bezogen auf das Gewicht aller Materialien in der Kernschicht, des Propylen-$\alpha$-Olefin-Elastomers umfasst.

**19.** Verfahren nach Anspruch 12, wobei die Kernschicht in einem Bereich von 40 Gew.-% bis 50 Gew.-%, bezogen auf das Gewicht aller Materialien in der Kernschicht, des Propylen-$\alpha$-Olefin-Elastomers umfasst.

## Revendications

**1.** Film de polypropylène orienté comprenant au moins une couche centrale prise en sandwich entre au moins deux couches superficielles, les couches comprenant :

(i) une couche centrale comprenant un polypropylène et, dans une plage allant de 20 % en poids à 50 % en poids, en poids des matériaux totaux dans la couche centrale, d'un élastomère de type propylène-$\alpha$-oléfine possédant des motifs issus d'une $\alpha$-oléfine dans une plage allant de 5 % en poids à 25 % en poids, en poids de l'élastomère de type propylène-$\alpha$- oléfine ;
(ii) une couche superficielle imprimable constituée d'un polyéthylène moyenne densité ou d'un polyéthylène haute densité ; et
(iii) une couche superficielle acceptant un adhésif comprenant dans une plage allant de 60 % en poids à 100 % en poids, en poids des matériaux totaux dans la couche superficielle acceptant un adhésif, d'un polypropylène ;

le film de polypropylène orienté possédant un module élastique dans le sens machine (« MD ») (norme ASTM 882) d'au moins 80 kpsi (551 MPa) ; et une valeur de trouble (norme ASTM D 1003) inférieure à 10 %.

**2.** Film de polypropylène orienté selon la revendication 1, la couche centrale étant essentiellement constituée de l'élastomère de type propylène-$\alpha$-oléfine et du polypropylène.

**3.** Film de polypropylène orienté selon la revendication 1, les couches (i) à (iii), cumulativement, possédant une épaisseur d'au moins 50 $\mu$m.

**4.** Film de polypropylène orienté selon la revendication 1, la couche centrale comprenant le polypropylène et dans la plage allant de 25 % en poids à 45 % en poids, en poids des matériaux totaux dans la couche centrale, d'un élastomère de type propylène-$\alpha$-oléfine.

**5.** Film de polypropylène orienté selon la revendication 1, le polypropylène de la couche centrale possédant un point de fusion supérieur à 120 °C et l'élastomère de type propylène-$\alpha$-oléfine possédant un point de fusion inférieur à 110 °C.

**6.** Film de polypropylène orienté selon la revendication 1, le film de polypropylène orienté possédant un module élastique dans le sens transversal (« TD ») (norme ASTM 882) d'au moins 200 kpsi (1 379 MPa).

**7.** Film de polypropylène orienté selon la revendication 1, le film de polypropylène orienté possédant une rigidité Gurley (MD, norme ASTM D6125-97 (2001)) inférieure à 15 mg.

**8.** Film de polypropylène orienté selon la revendication 1, la couche centrale comprenant dans une plage allant de 30 % en poids à 50 % en poids, en poids des matériaux totaux dans la couche centrale, de l'élastomère de type propylène-$\alpha$-oléfine.

**9.** Film de polypropylène orienté selon la revendication 1, la couche centrale comprenant dans une plage allant de 40 % en poids à 50 % en poids, en poids des matériaux totaux dans la couche centrale, de l'élastomère de type propylène-$\alpha$-oléfine.

**10.** Étiquette formée à partir du film de polypropylène orienté selon la revendication 1 comprenant le film de polypropylène orienté avec une feuille de support adhérée à la couche superficielle acceptant un adhésif avec un adhésif entre elles.

**11.** Récipient creux, compressible possédant l'étiquette selon la revendication 10 adhérée sur celui-ci.

**12.** Procédé de formation d'une étiquette adhésive comprenant :

(1) la coextrusion d'au moins un film à trois couches comprenant :

(i) une couche centrale comprenant un polypropylène et, dans une plage allant de 20 % en poids à 50 % en poids, en poids des matériaux totaux dans la couche centrale, d'un élastomère de type propylène-α-oléfine possédant des motifs issus d'une α-oléfine dans une plage allant de 5 % en poids à 25 % en poids, en poids de l'élastomère de type propylène-α-oléfine ;
(ii) une couche superficielle imprimable constituée d'un polyéthylène moyenne densité ou d'un polyéthylène haute densité ; et
(iii) une couche superficielle acceptant un adhésif comprenant dans une plage allant de 60 % en poids à 100 % en poids, en poids des matériaux totaux dans la couche superficielle acceptant un adhésif, d'un polypropylène ;

(2) l'orientation de l'au moins un film à trois couches ;
(3) la fixation d'un adhésif à la couche superficielle acceptant un adhésif de l'au moins un film à trois couches ;
(4) la fixation d'une feuille de support à l'au moins un film à trois couches possédant l'adhésif entre elles, formant ainsi une feuille adhésive de l'au moins un film à trois couches ; et
(5) la découpe de la feuille adhésive en une forme d'une étiquette avec un emporte-pièce à une fente de sortie dans une plage allant de 25 μm à 75 μm et une pression de matrice minimale supérieure à 200 psi (1379 kPa) ;

le film de polypropylène orienté possédant un module élastique dans le sens machine (« MD ») (norme ASTM 882) d'au moins 80 kpsi (551 MPa) ; et une valeur de trouble (norme ASTM D 1003) inférieure à 10 %.

13. Procédé selon la revendication 12, comprenant en outre le pelage, après la découpe, de l'étiquette adhésive de la couche de support ; une perte pour une matrice étant inférieure à 20 %.

14. Procédé selon la revendication 12, la couche centrale étant essentiellement constituée de l'élastomère de type propylène-α-oléfine et du polypropylène.

15. Procédé selon la revendication 12, la couche centrale comprenant un polypropylène et dans une plage allant de 25 % en poids à 45 % en poids, en poids des matériaux dans la couche centrale, d'un élastomère de type propylène-α-oléfine.

16. Procédé selon la revendication 12, la couche superficielle imprimable étant traitée pour accepter une impression, un traitement choisi dans un groupe constitué par une décharge corona, un traitement à la flamme, un traitement au plasma, un traitement chimique qui est soit permanent soit temporaire, une flamme polarisée, et une combinaison correspondante.

17. Procédé selon la revendication 12, l'étiquette adhésive possédant un module élastique dans le sens transversal (« TD ») (norme ASTM 882) d'au moins 200 kpsi (1 379 MPa).

18. Procédé selon la revendication 12, la couche centrale comprenant dans une plage allant de 30 % en poids à 50 % en poids, en poids des matériaux totaux dans la couche centrale, de l'élastomère de type propylène-α-oléfine.

19. Procédé selon la revendication 12, la couche centrale comprenant dans une plage allant de 40 % en poids à 50 % en poids, en poids des matériaux totaux dans la couche centrale, de l'élastomère de type propylène-α-oléfine.

## REFERENCES CITED IN THE DESCRIPTION

### Patent documents cited in the description

- US 7927712 B
- US 7537829 B
- US 7217463 B
- US 7052750 B
- US 6835462 B
- US 6663947 B
- US 6376058 B
- US 5709937 A
- US 5451283 A
- US 20090220757
- US 20090197022 A
- US 20090136698 A
- US 2008248299 A
- US 20060178483 A
- US 20030143357 A
- EP 1423408 A
- WO 2010120295 A
- US 2008206505 A
- WO 0236651 A
- US 6992158 B
- WO 0001745 A
- US 20040236042
- US 6881800 B

### Non-patent literature cited in the description

- **VERSTATE et al.** *MACROMOLECULES,* 1988, vol. 21, 3360
- LIQUID CHROMATOGRAPHY OF POLYMERS AND RELATED MATERIALS III. Marcel Dekker, 1981, vol. 207